# DEMANDE DE BREVET EUROPEEN

(11) **EP 1 275 563 A2**
(43) Date de publication de la demande: **15.01.2003**
(21) Numéro de dépôt: 02370030.5
(22) Date de dépôt: 08.07.2002
(51) Int. Cl.: B60R 11/02

(54) **Dispositif de fixation d'un appareil électrique.**

(30) Priorité: 12.07.2001 FR 0109311
(71) Demandeur: Toilliez, Olivier, 59730 Saint Python (FR); Toilliez, Christophe, 59000 Lille (FR)
(72) Inventeur: Toilliez, Olivier, 59730 Saint Python (FR); Toilliez, Christophe, 59000 Lille (FR)
(74) Mandataire: Hennion, Jean-Claude

(57) **Abrégé**

L'invention se rapporte à un dispositif de fixation d'un appareil électronique comprenant une embase (50) destinée à être fixée sur le fond d'un coffre de voiture caractérisé en ce que l'embase (50) constitue au moins indirectement une paroi d'une caisse (2) fermée apte à loger l'appareil électronique précité, la dite caisse présentant en outre une ouverture pour un accès audit appareil.

## Description

L'invention se rapporte à un dispositif de fixation d'un appareil électronique dans une voiture.

De plus en plus souvent les voitures sont équipées de chargeur de disques digitaux que l'on installe dans le coffre de la voiture.

Ces appareils sont fixés directement par des vis sur le fond du plancher du coffre.

Cette solution ne permet malheureusement pas d'emporter avec soi l'appareil lorsque l'on quitte son véhicule et par ailleurs lorsqu'on change de matériel il faut de nouveau repercer le plancher du coffre car les dimensions ne sont pas nécessairement les mêmes.

On déplore également que ces appareils placés dans le coffre subissent le chocs des articles transportés dans le véhicule.

En effet le carénage que comportent ces appareils ne protège l'appareil que contre des chocs relativement faibles.

Pour remédier à ces inconvénients, il est connu d'équiper le fond du coffre d'un support fixe surélevé sur lequel vient s'accrocher, par des moyens de fixation rapide, une platine fixée sur la base de l'appareil.

Cette disposition permet ainsi de monter ou démonter l'appareil rapidement et en principe minimise les risques de chocs.

L'invention se propose d'apporter une solution aux problèmes évoqués ci-dessus.

A cet effet, l'invention a pour objet un dispositif de fixation d'un appareil électronique dans une voiture comprenant une embase destinée à être fixée sur le fond d'un coffre de voiture et apte à recevoir un appareil électronique, ce dispositif étant caractérisé en ce que l'embase constitue au moins indirectement une paroi d'une caisse fermée apte à loger l'appareil électronique précité.

L'invention sera bien comprise à l'aide de la description ci-après faite à titre d'exemple non limitatif au regard du dessin qui représente schématiquement :

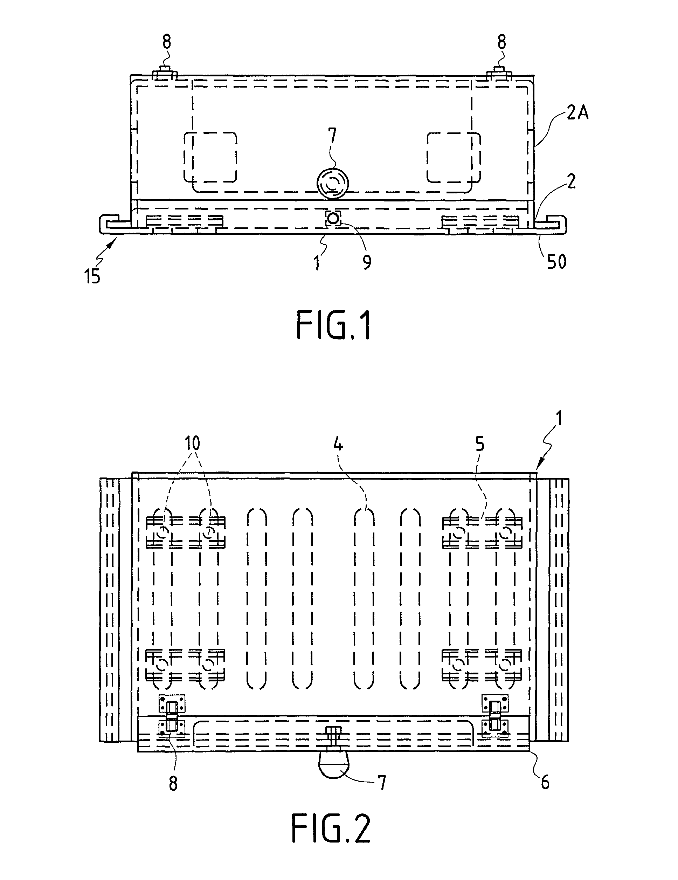

- figure 1 : le dispositif de l'invention en vue de face
- figure 2 : le dispositif de l'invention en vue de dessus

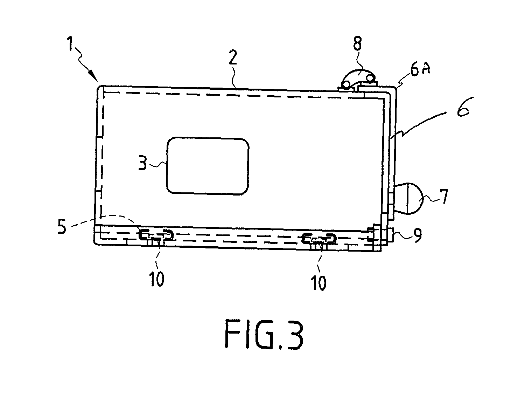

- figure 3 : le dispositif de l'invention en vue latérale.

En se reportant au dessin on voit un dispositif 1 de fixation d'un appareil électronique dans une voiture.

Généralement ce dispositif de fixation est placé dans le coffre de la voiture.

Il comprend donc une embase 50 destinée à être fixée sur le fond d'un coffre de voiture et cette embase est apte à recevoir un appareil électronique (non représenté).

Il peut s'agir d'un chargeur de disque ou d'un amplificateur ou autres.

Selon l'invention, l'embase 50 constitue au moins indirectement une paroi d'une caisse 2 fermée apte à loger l'appareil électronique précité.

Cette caisse présente en outre une ouverture 6 pour un accès audit appareil.

Des orifices 4 réalisés dans l'embase permettent de le fixer au moyen de vis ou boulons.

Avantageusement, l'embase comporte une multitude de lumières 4 pour le passage de moyens de fixation de rails 5 réglables et ajustables destinés à recevoir l'appareil électronique.

Comme on peut le voir sur le dessin, les lumières 4 sont allongées et parallèles à l'un des côtés de l'embase et les rails 5 se fixent perpendiculairement à ces lumières.

L'ouverture de la caisse est obturée par un volet 6A lequel est de préférence monté sur des charnières 8.

Ces charnières 8 sont, dans l'exemple de réalisation, portées par le haut de la caisse.

Elles pourraient être fixées latéralement.

Des découpes 3 dans la paroi latérale permettent le passage de câbles et/ou l'évacuation de la chaleur générée par l'appareil.

Une poignée 7 de préhension permet de manipuler le volet.

On peut y prévoir une serrure de sécurité.

De préférence, la caisse est constituée de deux partie, le fond 50 servant d'embase 50 et une partie 2A supérieure formant une sorte de cloche.

Pour l'assemblage de la partie supérieure avec le fond, un système 15 à glissière est prévu.

Un verrouillage en translation de la partie supérieure est assuré par exemple par une vis 9 et un écrou cage.

Ainsi, on a donc constitué autour de l'appareil électronique, une protection mécanique contre les chocs d'objets posés dans le coffre.

En outre la présence d'une serrure, sur le volet 6, limite le risque de vol.

Avantageusement, l'embase (50) est fixée sur le châssis du véhicule au moyen de bloc avertisseur encore appelé « silent bloc ».

## Revendications

1. Dispositif de fixation d'un appareil électronique comprenant une embase (50) destinée à être fixée sur le fond d'un coffre de voiture,
ce dispositif de fixation étant **caractérisée en ce que** l'embase (50) :
- d'une part, constitue une paroi d'une caisse (2) fermée apte à loger l'appareil électronique précité et,
- d'autre part, comporte une multitude de lumière (4) pour le passage de moyen de fixation de rails (5) réglables et ajustables destinés à recevoir l'appareil électronique.

2. Dispositif de fixation d'un appareil électronique selon la revendication 1 **caractérisé en ce que** la caisse présente en outre une ouverture (6) pour un accès audit appareil.

3. Dispositif de fixation d'un appareil électronique selon la revendication 2 **caractérisé en ce que** les lumières (4) sont allongées et parallèles à l'un des côtés de l'embase et les rails (5) se fixent perpendiculairement à ces lumières.

4. Dispositif de fixation d'un appareil électronique selon la revendication 2 **caractérisé en ce que** l'ouverture de la caisse est obturée par un volet (6A) monté sur des charnières (8).

5. Dispositif de fixation d'un appareil électronique selon la revendication 4 **caractérisé en ce que** les charnières sont portées par le haut de la caisse.

6. Dispositif de fixation d'un appareil électronique selon la revendication 4 **caractérisé en ce que** le volet (6) est équipé d'une serrure.

7. Dispositif de fixation d'un appareil électronique selon la revendication 1 **caractérisé en ce que** la caisse est constituée de deux partie, le fond (50) servant d'embase (50) et une partie (2A) supérieure formant une sorte de cloche.

8. Dispositif de fixation d'un appareil électronique selon la revendication 1 **caractérisé en ce qu'**un système (15) à glissière est prévu entre la partie supérieure et le fond.

9. Dispositif de fixation d'un appareil électronique selon la revendication 8 **caractérisé en ce qu'**un verrouillage en translation de la partie supérieure est assuré par une vis (9) et un écrou cage.
